# EUROPÄISCHE PATENTSCHRIFT

(11) **EP 2 196 250 B1**
(45) Veröffentlichungstag und Bekanntmachung des Hinweises auf die Patenterteilung: **01.02.2012**
(21) Anmeldenummer: 09175458.0
(22) Anmeldetag: 10.11.2009
(51) Int. Cl.: G01M 3/20, G01N 15/08

(54) **Verfahren und Vorrichtung zur Bestimmung des Abscheidegrades und/oder zur Durchführung eines Lecktests bei einer Filteranordnung**
Method and device for determining the separation level and/or carrying out a leak test in a filter assembly
Procédé et dispositif de détermination du degré de séparation et/ou d'exécution d'un test de fuite dans un agencement de filtre

(30) Priorität: 26.11.2008 DE 102008044083
(43) Veröffentlichungstag der Anmeldung: 16.06.2010
(73) Patentinhaber: YIT Germany GmbH, 80992 München (DE)
(72) Erfinder: Martinsteg, Hans, 52159 Roetgen (DE); Felser, Hans, 52080 Aachen (DE)
(74) Vertreter: Bauer, Dirk

(56) Entgegenhaltungen:
- EP-A1- 0 450 788
- DE-A1- 3 641 716
- US-A- 4 963 289
- US-A- 5 076 965

## Beschreibung

### Einleitung

Die vorliegende Erfindung betrifft ein Verfahren zur Bestimmung des Abscheidegrades und/oder zur Durchführung eines Lecktests bei einer Filteranordnung zur Abscheidung von Aerosolen und Stäuben aus einem Gasvolumenstrom, wobei ein Testaerosol mittels einer Aufgabeeinrichtung in Strömungsrichtung betrachtet vor einem Filterelement in einem Rohgasstrom aufgegeben und eine Messung einer Partikelanzahl und/oder eine Bestimmung einer Partikelkonzentration in Strömungsrichtung betrachtet hinter dem Filterelement in einem Reingasstrom durchgeführt wird, wobei der Aufgabeeinrichtung ein erster Mischvolumenstrom aus einem Testaerosol und Druckluft zugeführt wird, der mittels eines Aerosolgenerators erzeugt wird, wobei der mittels des Aerosolgenerators erzeugte erste Mischvolumenstrom mit einem Luftvolumenstrom zu einem weiter verdünnten zweiten Mischvolumenstrom gemischt und sodann der Aufgabeeinrichtung zugeführt wird. Ferner hat die Erfindung eine Vorrichtung zum Gegenstand, mit der das vorgenannte Verfahren durchgeführt werden kann.

### Stand der Technik

Aus dem Stand der Technik ist es bekannt, das Testaerosol mit einem Aerosolgenerator zu erzeugen, bevor es einer Filteranordnung zu Testzwecken rohluftseitig zugeführt wird. Hierzu wird Druckluft mit einem Druckniveau zwischen ca. 1 bar und 2 bar verwendet, um zu gewährleisten, dass das Aerosol in feinste Partikel zerstäubt wird. Zur Bestimmung des Abscheidegrads oder zur Durchführung eines Lecktests bei einer Filteranordnung sind nicht zuletzt aufgrund der bisweilen großen Abmessungen und der großen Anzahl der Filteranordnungen auch große Volumenströme erforderlich. Folglich muss ein großer Mischvolumenstrom aus dem Testaerosol und der Druckluft bereit gestellt werden, was insbesondere aufgrund des hohen Bedarfs an Druckluft sehr kostenintensiv und wegen des Erfordernisses des Trocknens der Druckluft auch sehr energieintensiv ist. Darüber hinaus ist der Investitionsbedarf zur Erstellung leistungsfähiger Druckluftsysteme sowie auch der spätere Wartungsaufwand für solche Systeme hoch.

Ein Verfahren, bei dem ebenfalls verdünntes Aerosol herangezogen wird, ist beispielsweise aus der US 5 076 965 A bekannt, die ein Verfahren zum Testen von Filtern in Gasmasken beschreibt.

Aus der DE 36 41 716 A1 ist ein Verfahren zur Beurteilung eines Filters bekannt, bei dem der Filter mittels eines Volumenstroms aus verdünntem Aerosol getestet wird. Da das Aerosol meist nur in hohen Konzentrationen erhältlich ist, ist es gemäß der D1 vorgesehen, dass das Aerosol über zwei hintereinander geschaltete "Verdünnerstrecken" mit Frischluft gemischt und verdünnt wird, bevor es dann in eine Filtereinheit eintritt und zu Testzwecken verwendet wird. Dabei ist jedoch nicht klar, ob eine gleichmäßige Mischung von Aerosol und Frischluft vorliegt.

### Aufgabe

Unter Berücksichtigung des vorstehend beschriebenen Standes der Technik liegt der Erfindung die Aufgabe zugrunde, ein Verfahren und eine Vorrichtung zur Bestimmung des Abscheidegrads oder zur Durchführung eines Lecktests bei einer Filteranordnung zur Abscheidung von Aerosolen aus einem Gasvolumenstrom vorzuschlagen, bei dem beziehungsweise bei der die Mischung von Aerosol und dem Luftvolumenstrom möglichst gleichmäßig erfolgt.

### Lösung

Verfahrensmäßig wird diese Aufgabe dadurch gelöst, dass der erste Mischvolumenstrom und der Luftvolumenstrom in einer Mischkammer gemischt werden, wobei der erste Mischvolumenstrom und der Luftvolumenstrom mit entgegengesetzten oder mit gleichen Strömungsrichtungen in der Mischkammer gemischt werden und wobei der Luftvolumenstrom vor der Vermischung mit dem ersten Mischvolumenstrom an einem zuströmseitigen Ende der Mischkammer und/oder der zweite Mischvolumenstrom an einem abströmseitigen Ende der Mischkammer durch eine Dralleinrichtung geführt wird bzw. werden, wobei im Falle zweier Dralleinrichtungen die Führung durch die Dralleinrichtungen entgegengesetzt ist.

Die Herstellung des das Testaerosol enthaltenden Volumenstroms erfolgt zweistufig, wobei in einem ersten Schritt ein erster Mischvolumenstrom mittels Druckluft erzeugt wird, der eine höhere Konzentration an Testaerosol aufweist als der letztlich zur Aufgabe in die Filteranordnung benötigte Mischvolumenstrom. In einem zweiten Schritt wird der auf die bekannte Weise hergestellte erste Mischvolumenstrom mit einem Luftvolumenstrom zu einem zweiten Mischvolumenstrom mit einer geringeren Konzentration an Testaerosol gemischt, wobei in diesem zweiten Schritt keine Verwendung von teurer Druckluft erforderlich ist. Folglich wird nur ein Teil des letztlich mittels der Aufgabeeinrichtung der Filteranordnung zugeführten Mischvolumenstroms durch unmittelbares Mischen von Druckluft und Testaerosol erzeugt, so dass der letztlich verwendete zweite Mischvolumenstrom deutlich günstiger herstellbar ist als auf herkömmlich bekannte Weise.

Dadurch, dass der erste Mischvolumenstrom und der Luftvolumenstrom in einer Mischkammer gemischt werden, wobei der erste Mischvolumenstrom und der Luftvolumenstrom mit entgegengesetzten oder mit gleichen Strömungsrichtungen in der Mischkammer gemischt werden, erfolgt eine gute beziehungsweise gleichmäßige Mischung der beiden Volumenströme, woraus sich wiederum ein zweiter Mischvolumenstrom mit einer gleichmäßigen Verteilung der Aerosolpartikel ergibt. Diese gleichmäßige Mischung wird darüber hinaus noch dadurch verbessert, dass an dem zuströmseitigen Ende der Mischkammer und/oder an dem abströmseitigen Ende der Mischkammer eine Dralleinrichtungen vorgesehen ist, wobei im Falle zweier Dralleinrichtungen die Führung durch die Dralleinrichtungen entgegengesetzt ist.

Es ist besonders wirtschaftlich, wenn der erste Mischvolumenstrom mit einem Luftvolumenstrom gemischt wird, der um ein Vielfaches größer ist als der erste Mischvolumenstrom. Überraschender Weise hat sich gezeigt, dass ein Testaerosol guter Qualität mit einem Mischungsverhältnis zwischen dem ersten Mischvolumenstrom und dem Luftvolumenstrom von größer als 10:1, vorzugsweise größer als 30:1, erzeugt werden kann. Bei Versuchen wurde gefunden, dass ein zu Testzwecken verwendbares Testaerosol hergestellt werden kann, wenn zum Beispiel der Luftvolumenstrom 58m³/h und der erste Mischvolumenstrom 2m³/h beträgt. Hier liegt ein Mischungsverhältnis von 29:1 vor.

Eine vorteilhafte Weiterbildung des Verfahrens sieht vor, dass der erste Mischvolumenstrom mit einem mittels eines HEPA-Filters gefilterten Umgebungsluftstroms gemischt wird. Auf diese Weise werden Verschmutzungen aus der Umgebungsluft zuverlässig herausgefiltert, so dass schließlich ein zweiter Mischvolumenstrom mit konstanten Eigenschaften, insbesondere ohne Fremdpartikel aus der Umgebung erzeugt wird.

Es ist insbesondere von Vorteil, wenn der Luftvolumenstrom mittels einer Luftfördereinrichtung, vorzugsweise eines Verdichters, erzeugt wird und dass die Mischung des Luftvolumenstroms mit dem ersten Mischvolumenstrom in Strömungsrichtung betrachtet vor, das heißt auf der Saugseite, oder hinter, das heißt auf der Druckseite, der Luftfördereinrichtung erfolgt. Der Verdichtungsenddruck des Luftvolumenstroms nach der Luftfördereinrichtung beträgt ca. 3500 Pa, so dass der Energieaufwand entsprechend niedrig ist.

Gemäß einer Ausführungsvariante kann der erste Mischstrom in einer Vormischkammer mit dem Luftvolumenstrom gemischt werden, bevor der so entstandene zweite Mischvolumenstrom der Mischkammer zugeführt wird.

Vorrichtungsgemäß wird die eingangs gestellt Aufgabe durch eine Vorrichtung gemäß dem Oberbegriff des Anspruchs 6 gelöst, die eine Mischkammer umfasst, der der erste Mischvolumenstrom und der Luftvolumenstrom getrennt oder bereits vorgemischt zuführbar sind, wobei die Mischkammer an ihrem zuströmseitigen Ende und/oder an ihrem abströmseitigen Ende mit einer Dralleinrichtung versehen ist, wobei im Falle zweier Dralleinrichtungen deren Einbaurichtungen entgegengesetzt sind. Mit Hilfe dieser Vorrichtung kann das erfindungsgemäße Verfahren auf einfache Weise durchgeführt werden. Die Dralleinrichtungen erzeugen eine Verwirbelung der Volumenströme, wodurch die letztendlich in dem zweiten Mischvolumenstrom befindlichen Aerosolpartikel gleichmäßig verteilt werden. Die Zuführung des Luftvolumenstroms erfolgt vorteilhafterweise mit einer Luftfördereinrichtung, insbesondere einem Verdichter, der in Strömungsrichtung betrachtet hinter der Mischkammer angeordnet ist. Es hat sich gezeigt, dass sich im vorliegenden Fall Ventilatoren oder Seitenkanalverdichter besonders gut als Luftfördereinrichtung eignen, wobei diese sehr viel kostengünstiger betrieben werden können als es bei der Verwendung von Druckluft der Fall ist. Alternativ kommen auch Drehkolbenverdichter, wie beispielsweise Roots- Gebläse in Frage. Zur Reinigung des Luftvolumenstroms ist es sinnvoll, wenn ein HEPA-Filter angeordnet wird, das sich in Strömungsrichtung betrachtet vor der Luftfördereinrichtung befindet.

Gemäß einer vorteilhaften Ausführungsform der erfindungsgemäßen Vorrichtung ist eine Vormischkammer vorgesehen, in der der erste Mischstrom mit dem Luftvolumenstrom gemischt wird, bevor der so entstandene zweite Mischvolumenstrom der Mischkammer zugeführt wird.

### Ausführungsbeispiel

Die Erfindung wird nachfolgend anhand von Ausführungsbeispielen erfindungsgemäßer Vorrichtungen, die in den Figuren schematisch dargestellt sind, näher erläutert.

Es zeigt
- Fig. 1:: einen Vertikalschnitt durch eine erfindungsgemäße Vorrichtung in einer ersten Ausführungsform,
- Fig. 2:: einen Vertikalschnitt durch eine erfindungsgemäße Vorrichtung in einer zweiten Ausführungsform,
- Fig. 3:: eine Ansicht der erfindungsgemäßen Verteileinrichtung,
- Fig. 4:: ein Schnitt durch eine Lanze der Verteileinrichtung und
- Fig. 5:: ein Schnitt durch eine Lanze der Rohluftprobennahme.

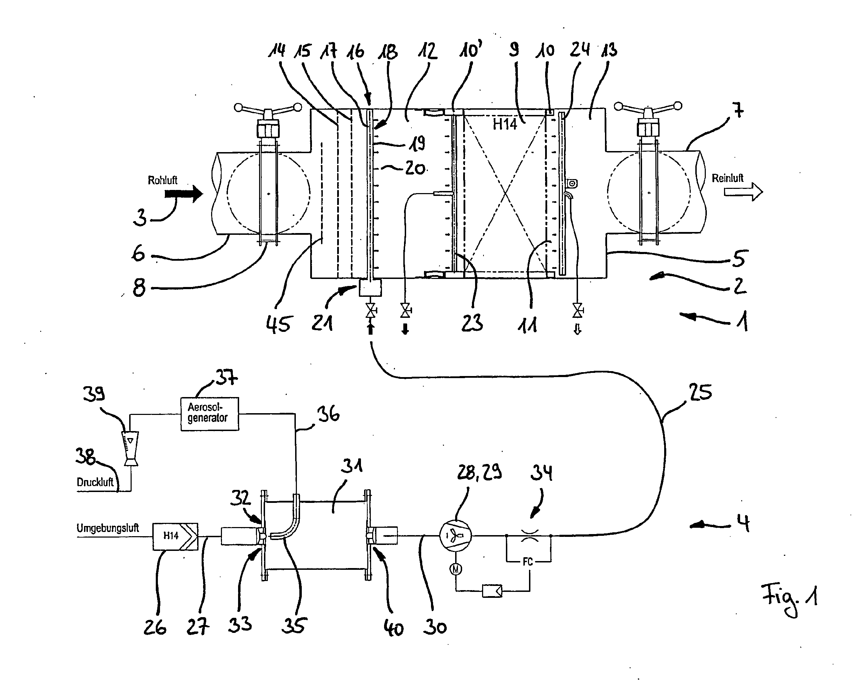

In der Figur 1 ist ein Vertikalschnitt durch eine erste erfindungsgemäße Vorrichtung 1 zur Bestimmung des Abscheidegrades sowie zur Durchführung eines Lecktests bei einer Filteranordnung 2 zur Abscheidung von Aerosolen aus einem in Richtung des Pfeils 3 einströmenden Gasvolumenstrom dargestellt. Ferner geht aus der Figur 1 eine schematische Darstellung für eine Vorrichtung 4 zur Herstellung und Vorkonditionierung des Testaerosols hervor.

Die Vorrichtung 1 umfasst eine Filteranordnung 2, die ein im wesentlichen quaderförmiges Filtergehäuse 5 mit einem rohgasseitigen Anschlussstutzen 6 und einem reingasseitigen Anschlussstutzen 7 besitzt. Sowohl im rohgasseitigen als auch im reingasseitigen Anschlussstutzen 6, 7 befindet sich jeweils eine Absperrklappe 8.

Im Inneren des Filtergehäuses 5 befindet sich ein Filterelement 9 in Form einer quaderförmigen HEPA- Filterzelle. Das Filterelement 9 ist unter Zwischenschaltung bekannter Dichtungen mit Hilfe eines Anpressrahmens 10' gegen Randstreifen eines Dichtrahmens 10 gepresst, der eine dem freien Querschnitt des Filterelementes 9 entsprechende Durchlassöffnung 11 besitzt. Das Filterelement 9 und der Dichtrahmen 10, der umlaufend dicht an das Filtergehäuse 5 angeschlossen ist, unterteilen das Filtergehäuse in einen Rohgasraum 12 und einen Reingasraum 13. Ein in Richtung des Pfeils 3 einströmender Gasvolumenstrom, aus dem mitgeführte Stäube und Aerosole abgeschieden werden sollen, kann somit nur über das Filtermedium des Filterelementes 9 von dem Rohgasraum 12 in den Reingasraum 13 und somit aus dem reingasseitigen Anschlussstutzen 7 hinaus gelangen.

Aufgrund einer sprunghaften Querschnittsvergrößerung zwischen dem rohgasseitigen Anschlussstutzen 6 und dem Filtergehäuse 5 erfährt der einströmende Gasvolumenstrom bei Eintritt in das Filtergehäuse 5 eine gewisse Verwirbelung, weshalb nah an dem rohgasseitigen Anschlussstutzen 6 zwei hintereinandergeschaltete Gleichrichter 14, 15 in dem Filtergehäuse 5 angeordnet sind, wobei deren Abmessungen bezüglich Höhe und Tiefe den Abmessungen des Querschnitts des Filtergehäuses 5 entsprechen. Bei Erfordernis wäre zur besseren Vergleichmäßigung der Strömung der Einbau eines dritten Gleichrichters 45 (zum Beispiel Prallplatte) möglich.

In Strömungsrichtung (Pfeil 3) betrachtet hinter den beiden Gleichrichtern 14, 15, wo sich der Gasvolumenstrom durch eine gleichmäßige Strömung auszeichnet, ist eine Aufgabeeinrichtung 16 zur Aufgabe eines Testaerosols angeordnet. Die Aufgabeeinrichtung 16 umfasst eine Verteileinrichtung 17, die eine Mehrzahl von sich über die Höhe des Filtergehäuses 5 erstreckenden Lanzen 18 aufweist, die wiederum jeweils mit einer Mehrzahl von Austrittsöffnungen 19 versehen sind, aus denen jeweils ein als Pfeil 20 dargestellter Teilvolumenstrom des Testaerosols austritt. Die Teilvolumenströme werden demnach in Richtung des Gasvolumenstroms in denselben eingebracht.

Die Lanzen 18 sind jeweils an einen sich außerhalb des Filtergehäuses 5 befindlichen Verteilkanal 21 angeschlossen, in dem ein Strömungsgleichrichter 22 angeordnet ist, der in der Figur 6 zu erkennen ist.

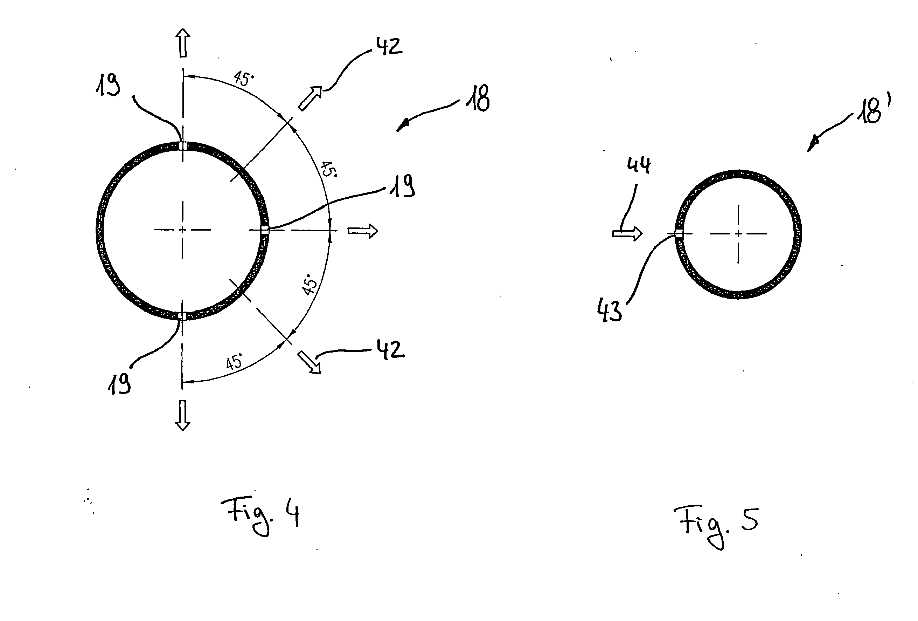

Um die Konzentration des Testaerosols im Rohgasraum 12 ermitteln zu können, ist unmittelbar vor dem Filterelement 9 eine Rohluftprobenahme 23 vorgesehen, die ebenfalls aus einer Mehrzahl von sich über die Höhe des Filtergehäuses erstreckenden Lanzen 18' besteht, auf die in der Figur 5 weiter eingegangen wird.

Zur Bestimmung des Abscheidegrades ist im Reingasraum 13 unmittelbar hinter dem Filterelement 9 ein Aufnahmeelement 24 vorgesehen, mittels dem zwecks Überprüfung der Partikelkonzentration ein Teilstrom des Reingasstroms entnommen wird. Dieser wird in bekannter Weise einem optischen Partikelzähler zugeführt.

Die Vorrichtung 4 dient der Herstellung und Vorkonditionierung des Testaerosols, das mittels einer Leitung 25 dem Verteilkanal 21 zugeführt wird. Die Vorrichtung umfasst eine als Verdichter 28 ausgebildete Luftfördereinrichtung 29, mittels der Umgebungsluft über eine Leitung 30 angesaugt wird. Die Umgebungsluft wird zwecks Reinigung zunächst über ein HEPA- Filter 26 geleitet und gelangt dann über eine Leitung 27 in eine Mischkammer 31, wobei sich im Bereich einer Eintrittsöffnung 32 der Mischkammer 31 eine Dralleinrichtung 33 befindet, mittels der der aus der Umgebungsluft gebildete Luftvolumenstrom verwirbelt wird. Eine zwischen dem Verdichter 28 und der Leitung 25 angeordnete Einrichtung 34 dient zur Volumenstrommessung und -regelung.

Unmittelbar hinter der Dralleinrichtung 33 ist innerhalb der Mischkammer 31 ein Austrittsrohr 35 zur Einleitung eines ersten Mischvolumenstroms vorgesehen, wobei der erste Mischvolumenstrom in die zu der Strömungsrichtung des aus Umgebungsluft gebildeten Luftvolumenstroms entgegengesetzte Richtung eingebracht wird. Die von der Dralleinrichtung 33 verwirbelte Umgebungsluft wird somit gleichmäßig mit dem ersten Mischvolumenstrom beaufschlagt und es entsteht ein weiter verdünnter zweiter Mischvolumenstrom in der Mischkammer 31. Durch die Anordnung des Verdichters 28 hinter der Mischkammer 31 herrschen keine großen Drücke in dieser und eine Einbringung des ersten Mischvolumenstroms in die Mischkammer 31 ist problemlos möglich.

Der über eine Leitung 36 in die Mischkammer 31 eingebrachte erste Mischvolumenstrom wird mittels eines Aerosolgenerators 37 erzeugt. Eine mit Druckluft gespeiste Leitung 38 führt über einen Schwebekörperdurchflussmesser 39 zu dem Aerosolgenerator 37, in dem aus der Druckluft und einem Vorrat des Testaerosols der erste Mischvolumenstrom gebildet wird.

In der Mischkammer 31 erfolgt eine weitere Verdünnung des in dem ersten Mischvolumenstrom befindlichen Aerosols, das die Mischkammer 31 über eine weitere Dralleinrichtung 40 als zweiter Mischvolumenstrom verlässt und über die vorerwähnte Leitung 25 dem Verteilkanal 21 und anschließend dem Rohgasstrom zugeführt wird. Der zweite Mischvolumenstrom beträgt etwa 60m³/h und setzt sich aus etwa 2m³/h des ersten Mischvolumenstroms und 58m³/h des aus der Umgebungsluft gebildeten Luftvolumenstroms zusammen.

Um eine ausreichende Zerstäubung des Aerosols zu gewährleisten wird dem Aerosolgenerator 37 Druckluft von 2 bar zugeführt. Die Umgebungsluft wird der Mischkammer 31 bei einem Unterdruck von 140 Pa zugeführt. Mit Verschmutzen des HEPA-Filters 26 steigt der Unterdruck in der Mischkammer 31, da der Volumenstrom mittels des Reglers konstant gehalten wird.

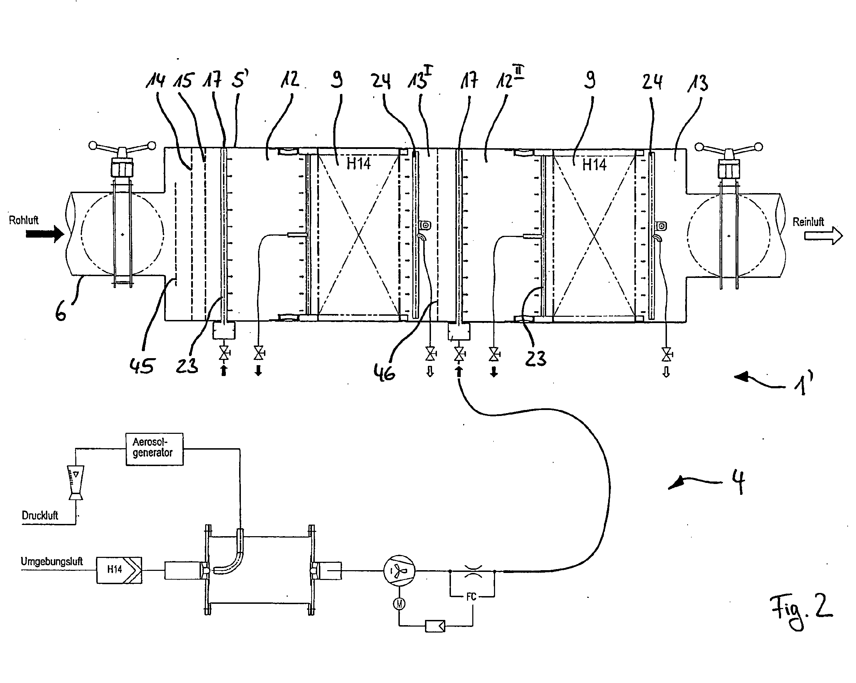

Die Figur 2 zeigt einen Vertikalschnitt durch eine erfindungsgemäße Vorrichtung 1' in einer zweiten Ausführungsform, deren Verteileinrichtung 17 mit derselben Vorrichtung 4 zur Herstellung des Testaerosols gespeist wird.

Im Unterschied zu der Vorrichtung 1 aus Figur 1 verfügt die in Figur 2 gezeigte Vorrichtung 1' über ein Filtergehäuse 5', in dem zwei in Reihe geschaltete Filterelemente 9 angeordnet sind. Um die beiden Filterelemente 9 separat voneinander überprüfen zu können, ist vor jedem Filterelement 9 eine Verteileinrichtung 17 zur Aufgabe des Testaerosols nach oben beschriebener Art sowie eine Rohluftprobenahme 23 vorgesehen. In Strömungsrichtung betrachtet befindet sich hinter jedem Filterelement 9 ein Aufnahmeelement 24 zur Überprüfung der Partikelkonzentration des gefilterten Gasvolumenstroms.

Während der in Strömungsrichtung vor dem ersten Filterelement 9 befindliche Bereich den Rohgasraum 12 und der in Strömungsrichtung hinter dem zweiten Filterelement 9 befindliche Bereich den Reingasraum 13 der Filteranordnung 2' bildet, stellt der zwischen den Filterelementen 9 befindliche Bereich den Reingasraum 13^{l} des ersten Filterelementes 9 und gleichzeitig den Rohgasraum 12^{ll} des zweiten Filterelementes 9 dar. Im Rohgasraum 12 sind im Bereich des Anschlussstutzens 6 abermals zwei hintereinander geschaltete Gleichrichter 14, 15 angeordnet. Darüber hinaus ist ein dritter Gleichrichter 45 direkt am Eintritt in das Filtergehäuse 5' sowie ein weiterer Gleichrichter 46 vor der Verteileinrichtung 17 des zweiten Filterelements 9 angeordnet.

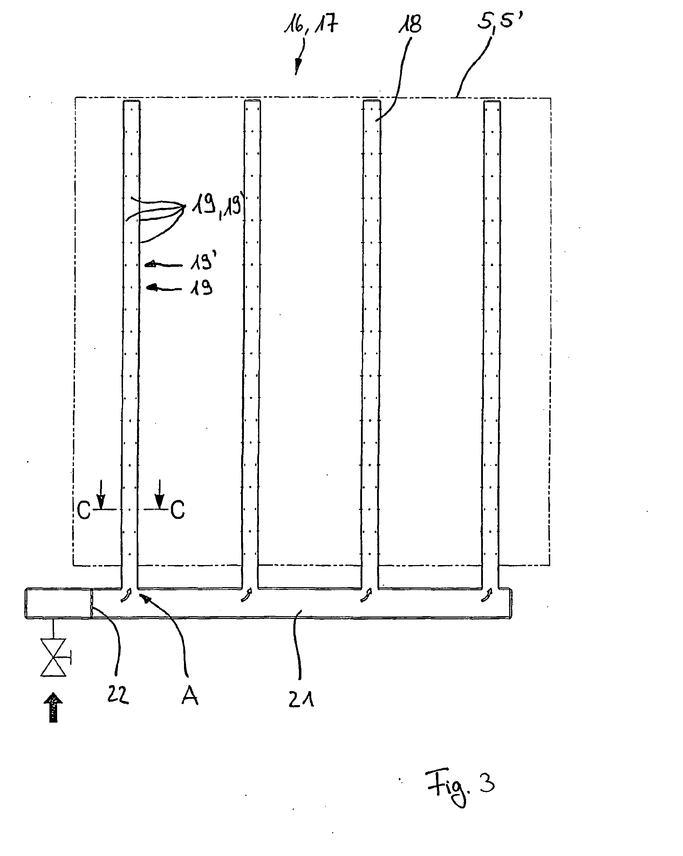

In der Figur 3 ist eine Ansicht der erfindungsgemäßen Aufgabeeinrichtung 16 aus den Figuren 1 und 2 dargestellt, deren Verteileinrichtung 17 mit vier Lanzen 18 ausgestattet ist. Während sich die Lanzen 18 innerhalb des Filtergehäuses 5, 5' befinden und sich über annähernd die gesamte Höhe des Filtergehäuses 5, 5' erstrecken, befindet sich der die Lanzen 18 mit Testaerosol versorgenden gemeinsamer Verteilkanal 21 außerhalb des Filtergehäuses 5, 5'. Die Lanzen 18 sind jeweils mit Austrittsöffnungen 19 versehen, die gleichmäßig über den Querschnitt des Filtergehäuses 5, 5' verteilt sind, so dass die Teilvolumenströme über den Querschnitt gleichmäßig verteilt eingebracht werden.

Insbesondere ist aus der Figur 3 erkennbar, dass jeweils auf einer bestimmten Höhe der Lanzen 18 Gruppen von Austrittsöffnungen 19, 19' angeordnet sind, die sich über den Umfang der Lanze 18 verteilen. Dabei befinden sich abwechselnd drei Austrittsöffnungen 19 und zwei Austrittsöffnungen 19' auf einer Höhe. Zwar besitzen die vier Lanzen 18 jeweils das selbe Muster an Austrittsöffnungen 19, 19', jedoch sind benachbarte Lanzen 18 in ihrer Längsrichtung derart versetzt, dass sich die drei Austrittsöffnungen 19 einer Lanze 18 neben den zwei Austrittsöffnungen 19' der benachbarten Lanze 18 befinden. Die Austrittsöffnungen 19, 19' weisen einen Durchmesser von etwa 1,5 mm auf.

Im Anfangsbereich des Verteilkanals 21, nämlich vor einer ersten Abzweigung A einer Lanze 18, ist der aus einem Lochblech bestehende Strömungsgleichrichter 22 angeordnet, der zusätzlich für eine annähernd gleiche Volumenstrombeaufschlagung des Testaerosols in den einzelnen Lanzen 18 sorgt.

Die Figur 4 zeigt den Querschnitt einer Lanze 18, aus dem besser deutlich wird, dass die Lanze 18 nicht nur über ihre Höhe mit unterschiedlich angeordneten Austrittsöffnungen 19, 19' versehen ist, sondern dass sich diese ebenfalls über Ihren Umfang verteilen. Auf bestimmten Höhen besitzt die Lanze 18 nämlich entweder zwei oder drei Austrittsöffnungen 19, 19'. Im Fall, dass auf einer bestimmten Höhe drei Austrittsöffnungen 19 angeordnet sind, ist eine genau zu der Strömungsrichtung des Gasvolumenstroms ausgerichtet und die übrigen zwei Austrittsöffnungen 19 jeweils senkrecht zu der Strömungsrichtung ausgerichtet, also jeweils 90° zu der mittleren Austrittsöffnung 19 versetzt. Jeweils oberhalb und unterhalb einer Ebene der Lanze 18 mit drei Austrittsöffnung 19 befindet sich eine Ebene, in der die Lanze 18 mit lediglich zwei Austrittsöffnungen 19' versehen ist, wobei diese um 45° von der Strömungsrichtung versetzt sind. Auf diese Weise ist eine äußerst gleichmäßige Verteilung des Aerosols im Rohgasraum 12 möglich.

Schließlich zeigt die Figur 5 einen Schnitt durch eine Lanze 18' der Rohluftprobennahme 23. Diese weist über ihre Höhe verteilt einzelne Schlitze 43 auf, die jeweils entgegen die durch den Pfeil 44 Strömungsrichtung des Gasvolumenstroms zeigen, so dass sie optimal für ihren Zweck, der Entnahme von Rohluft, ausgerichtet sind. Die Schlitze 43 weisen eine Breite von etwa 1,0 mm und eine Länge von etwa 10,0 mm auf.

### Bezugszeichenliste:

- 1, 1': Vorrichtung
- 2: Filteranordnung
- 3: Pfeil
- 4: Vorrichtung
- 5, 5': Filtergehäuse
- 6: Rohgasseitiger Anschlussstutzen
- 7: Reingasseitiger Anschlussstutzen
- 8: Absperrklappe
- 9: Filterelement
- 10: Dichtrahmen
- 10': Anpressrahmen
- 11: Durchlassöffnung
- 12, 12^{ll}: Rohgasraum
- 13, 13^{l}: Reingasraum
- 14: Gleichrichter
- 15: Gleichrichter
- 16: Aufgabeeinrichtung
- 17: Verteileinrichtung
- 18, 18': Lanze
- 19, 19': Austrittsöffnung
- 20: Pfeil
- 21: Verteilkanal
- 22: Strömungsgleichrichter
- 23: Rohluftprobenahme
- 24: Aufnahmeelement
- 25: Leitung
- 26: HEPA- Filter
- 27: Leitung
- 28: Verdichter

- 29: Luftfördereinrichtung
- 30: Leitung
- 31: Mischkammer
- 32: Eintrittsöffnung
- 33: Dralleinrichtung
- 34: Einrichtung
- 35: Austrittsrohr
- 36: Leitung
- 37: Aerosolgenerator
- 38: Leitung
- 39: Schwebekörperdurchflussmesser
- 40: Dralleinrichtung

- 42: Pfeil
- 43: Schlitze
- 44: Pfeil
- 45: dritter Gleichrichter
- 46: Gleichrichter
- A: Abzweigung

## Patentansprüche

1. Verfahren zur Bestimmung des Abscheidegrades und/oder zur Durchführung eines Lecktests bei einer Filteranordnung (2) zur Abscheidung von Aerosolen und Stäuben aus einem Gasvolumenstrom, wobei ein Testaerosol mittels einer Aufgabeeinrichtung (16) in Strömungsrichtung betrachtet vor einem Filterelement (9) in einem Rohgasstrom aufgegeben und eine Messung einer Partikelanzahl und/oder eine Bestimmung einer Partikelkonzentration in Strömungsrichtung betrachtet hinter dem Filterelement (9) in einem Reingasstrom durchgeführt wird, wobei der Aufgabeeinrichtung (16) ein erster Mischvolumenstrom aus einem Testaerosol und Druckluft zugeführt wird, der mittels eines Aerosolgenerators (37) erzeugt wird, wobei der mittels des Aerosolgenerators (37) erzeugte erste Mischvolumenstrom mit einem Luftvolumenstrom zu einem weiter verdünnten zweiten Mischvolumenstrom gemischt und sodann der Aufgabeeinrichtung (16) zugeführt wird, **dadurch gekennzeichnet, dass** der erste Mischvolumenstrom und der Luftvolumenstrom in einer Mischkammer (31) gemischt werden, wobei der erste Mischvolumenstrom und der Luftvolumenstrom mit entgegengesetzten oder mit gleichen Strömungsrichtungen in der Mischkammer (31) gemischt werden und wobei der Luftvolumenstrom vor der Vermischung mit dem ersten Mischvolumenstrom an einem zuströmseitigen Ende der Mischkammer (31) und/oder der zweite Mischvolumenstrom an einem abströmseitigen Ende der Mischkammer (31) durch eine Dralleinrichtung (33, 40) geführt wird bzw. werden, wobei im Falle zweier Dralleinrichtungen (33, 40) die Führung durch die Dralleinrichtungen (33, 40) entgegengesetzt ist.

2. Verfahren nach Anspruch 1, **dadurch gekennzeichnet, dass** das Mischungsverhältnis zwischen dem ersten Mischvolumenstrom und dem Luftvolumenstrom größer als 10:1, vorzugsweise größer als 30:1 1 ist.

3. Verfahren nach Anspruch 1 oder 2, **dadurch gekennzeichnet, dass** der erste Mischvolumenstrom mit einem mittels eines HEPA-Filters (26) gefilterten Umgebungsluftstrom gemischt wird.

4. Verfahren nach einem der Ansprüche 1 bis 3, **dadurch gekennzeichnet, dass** der Luftvolumenstrom mittels einer Luftfördereinrichtung (29), vorzugsweise eines Verdichters, erzeugt wird und dass die Mischung des Luftvolumenstroms mit dem ersten Mischvolumenstrom in Strömungsrichtung betrachtet vor oder hinter der Luftfördereinrichtung (29) erfolgt.

5. Verfahren nach einem der Ansprüche 1 bis 4, **dadurch gekennzeichnet, dass** der erste Mischstrom in einer Vormischkammer mit dem Luftvolumenstrom gemischt wird, bevor der so entstandene zweite Mischvolumenstrom der Mischkammer (31) zugeführt wird.

6. Vorrichtung (1, 1') zur Bestimmung des Abscheidegrades oder zur Durchführung eines Lecktests bei einer Filteranordnung (2) zur Abscheidung von Aerosolen und Stäuben aus einem Gasvolumenstrom, mit einer Aufgabeeinrichtung (16), mit der in Strömungsrichtung des Gasvolumenstroms betrachtet vor einem Filterelement (9) ein Testaerosol in einen Rohgasstrom aufgebbar ist und mit einem Aufnahmeelement (24), mit dem in Strömungsrichtung des Gasvolumenstroms betrachtet hinter dem Filterelement (9) ein Teilvolumenstrom aus einem Reingasstrom entnehmbar ist, wobei in dem Teilvolumenstrom mittels einer Auswerteeinrichtung eine Partikelanzahl messbar oder eine Partikelkonzentration jeweils des Testaerosols bestimmbar ist und mit einem Aerosolgenerator (37), mittels dessen aus dem Testaerosol und Druckluft ein erster Mischvolumenstrom erzeugbar ist, der der Aufgabeeinrichtung (16) zuführbar ist, wobei der erste Mischvolumenstrom vor dem Eintritt in die Aufgabeeinrichtung (16) mit einem Luftvolumenstrom zu einem weiter verdünnten zweiten Mischvolumenstrom mischbar ist, **gekennzeichnet durch** eine Mischkammer (31), der der erste Mischvolumenstrom und der Luftvolumenstrom getrennt oder bereits vorgemischt zuführbar sind, wobei die Mischkammer (31) an ihrem zuströmseitigen Ende und/oder an ihrem abströmseitigen Ende mit einer Dralleinrichtung (33, 40) versehen ist, wobei im Falle zweier Dralleinrichtungen (33, 40) deren Einbaurichtungen entgegengesetzt sind.

7. Vorrichtung nach Anspruch 6, **gekennzeichnet durch** eine Luftfördereinrichtung (29), insbesondere einen Verdichter, der in Strömungsrichtung betrachtet hinter oder vor der Mischkammer (31) angeordnet ist und ein HEPA-Filter (26), das in Strömungsrichtung betrachtet vor der Luftfördereinrichtung (29) angeordnet ist.

8. Vorrichtung nach Anspruch 7, **dadurch gekennzeichnet, dass** der Verdichter ein Ventilator oder ein Seitenkanalverdichter ist.

9. Vorrichtung nach einem der Ansprüche 6 bis 8, **gekennzeichnet durch** eine Vormischkammer, in der der erste Mischstrom mit dem Luftvolumenstrom gemischt wird, bevor der so entstandene zweite Mischvolumenstrom der Mischkammer (31) zugeführt wird.

## Claims

1. Method for determining the degree of separation and/or for carrying out a leakage test in a filter arrangement (2) for separating out aerosols and dusts from a gas volume flow, wherein a test aerosol is output by means of an output device (16) in an untreated gas flow upstream of a filter element (9) as seen in the direction of flow and measurement of a number of particles and/or a determination of a particle concentration is carried out in a clean gas flow downstream of the filter element (9) as seen in the direction of flow, wherein the output device (16) is supplied with a first mixed volume flow from a test aerosol and compressed air, which flow is generated by means of an aerosol generator (37), wherein the first mixed volume flow generated by means of the aerosol generator (37) is mixed with an air volume flow to form a further diluted second mixed volume flow and then supplied to the output device (16), **characterised in that** the first mixed volume flow and the air volume flow are mixed in a mixing chamber (31), wherein the first mixed volume flow and the air volume flow are mixed in the mixing chamber (31) with opposite or the same directions of flow and wherein before mixing with the first mixed volume flow the air volume flow is guided through a swirling device (33, 40) at an inflow-side end of the mixing chamber (31) and/or the second mixed volume flow is guided through a swirling device (33, 40) at an outflow-side end of the mixing chamber (31), wherein, in the case of two swirling devices (33, 40), the flows are guided in opposite directions through the swirling devices (33, 40).

2. Method according to Claim 1, **characterised in that** the mixing ratio between the first mixed volume flow and the air volume flow is greater than 10:1, preferably greater than 30:1.

3. Method according to Claim 1 or 2, **characterised in that** the first mixed volume flow is mixed with an ambient air flow which is filtered by means of a HEPA filter (26).

4. Method according to one of Claims 1 to 3, **characterised in that** the air volume flow is generated by means of an air-conveying device (29), preferably a compressor, and that the air volume flow is mixed with the first mixed volume flow upstream or downstream of the air-conveying device (29), as seen in the direction of flow.

5. Method according to one of Claims 1 to 4, **characterised in that** the first mixed flow is mixed with the air volume flow in a premixing chamber before the second mixed volume flow thus produced is supplied to the mixing chamber (31).

6. Device (1, 1') for determining the degree of separation or for carrying out a leakage test in a filter arrangement (2) for separating out aerosols and dusts from a gas volume flow, having an output device (16), with which a test aerosol can be output into an untreated gas flow upstream of a filter element (9) as seen in the direction of flow of the gas volume flow, and having a receiving element (24), with which a partial volume flow can be removed from a clean gas flow downstream of the filter element (9) as seen in the direction of flow of the gas volume flow, wherein a particle number of the test aerosol can be measured or a particle concentration of the test aerosol can be determined in the partial volume flow by means of an evaluation device, and having an aerosol generator (37), by means of which a first mixed volume flow can be generated from the test aerosol and compressed air, which mixed volume flow can be supplied to the output device (16), wherein the first mixed volume flow can be mixed with an air volume flow to form a further diluted second mixed volume flow before entering the output device (16), **characterised by** a mixing chamber (31), to which the first mixed volume flow and the air volume flow can be supplied separately or already premixed, wherein the mixing chamber (31) is provided at its inflow-side end and/or at its outflow-side end with a swirling device (33, 40), wherein in the case of two swirling devices (33, 40) the installation directions thereof are in opposite directions.

7. Device according to Claim 6, **characterised by** an air-conveying device (29), in particular a compressor, which is arranged downstream or upstream of the mixing chamber (31) as seen in the direction of flow, and a HEPA filter (26), which is arranged upstream of the air-conveying device (29) as seen in the direction of flow.

8. Device according to Claim 7, **characterised in that** the compressor is a fan or a side channel compressor.

9. Device according to one of Claims 6 to 8, **characterised by** a premixing chamber, in which the first mixed flow is mixed with the air volume flow before the second mixed volume flow thus produced is supplied to the mixing chamber (31).

## Revendications

1. Procédé pour la détermination du degré d'extraction et/ou pour l'exécution d'un test de fuite dans un ensemble de filtres (2) pour l'extraction d'aérosols et de poussières hors d'un flux volumique de gaz, dans lequel un aérosol test est alimenté dans un flux de gaz brut au moyen d'un dispositif d'alimentation (16), en amont d'un élément de filtre (9) vu dans le sens d'écoulement, et une mesure d'une quantité de particules et/ou une détermination d'une concentration de particules sont effectuées dans un flux de gaz pur, en aval de l'élément de filtre (9) vu dans le sens d'écoulement, dans lequel un premier flux volumique d'un mélange d'aérosol test et d'air comprimé, produit au moyen d'un générateur d'aérosol (37), est alimenté vers le dispositif d'alimentation (16), dans lequel le premier flux volumique de mélange produit au moyen du générateur d'aérosol (37) est mélangé avec un flux volumique d'air pour obtenir un autre deuxième flux volumique de mélange dilué, puis alimenté vers le dispositif d'alimentation (16), **caractérisé en ce que** le premier flux volumique de mélange et le flux volumique d'air sont mélangés dans une chambre de mélange (31), dans lequel le premier flux volumique de mélange et le flux volumique d'air sont mélangés avec des sens d'écoulement inverses ou identiques dans la chambre de mélange (31), et dans lequel le flux volumique d'air est guidé à travers un dispositif de mise en rotation (33, 40) avant le mélange avec le premier flux volumique de mélange à une extrémité de la chambre de mélange (31) côté flux entrant, et/ou le deuxième flux volumique de mélange est guidé à travers celui-ci à une extrémité de la chambre de mélange (31) côté flux sortant, dans lequel le guidage à travers le dispositif de mise en rotation (33, 40) est inversé dans le cas de deux dispositifs de mise en rotation (33, 40).

2. Procédé selon la revendication 1, **caractérisé en ce que** le rapport de mélange entre le premier flux volumique de mélange et le flux volumique d'air est supérieur à 10:1, de préférence supérieur à 30:1.

3. Procédé selon la revendication 1 ou 2, **caractérisé en ce que** le premier flux volumique de mélange est mélangé avec un flux d'air ambiant filtré au moyen d'un filtre HEPA (26).

4. Procédé selon l'une des revendications 1 à 3, **caractérisé en ce que** le flux volumique d'air est produit au moyen d'un dispositif de circulation d'air (29), de préférence un compresseur, et **en ce que** le mélange du flux volumique d'air avec le premier flux volumique de mélange est effectué en amont ou en aval du dispositif de circulation d'air (29) vu dans le sens d'écoulement.

5. Procédé selon l'une des revendications 1 à 4, **caractérisé en ce que** le premier flux de mélange est mélangé avec le flux volumique d'air dans une chambre de mélange préalable, avant que le deuxième flux volumique de mélange ainsi obtenu soit alimenté vers la chambre de mélange (31).

6. Dispositif (1, 1') pour la détermination du degré d'extraction ou pour l'exécution d'un test de fuite dans un ensemble de filtres (2) pour l'extraction d'aérosols et de poussières hors d'un flux volumique de gaz, avec un dispositif d'alimentation (16) permettant d'alimenter un aérosol test dans un flux de gaz brut, en amont d'un élément de filtre (9) vu dans le sens d'écoulement du flux volumique de gaz, et avec un élément d'alimentation (24) permettant d'extraire un flux volumique partiel à partir d'un flux de gaz pur, en aval de l'élément de filtre (9) vu dans le sens d'écoulement du flux volumique de gaz, dans lequel une quantité de particules peut être mesurée dans le flux volumique partiel au moyen d'un dispositif d'évaluation, ou une concentration de particules de l'aérosol peut être déterminée, et avec un générateur d'aérosol (37) permettant de produire un premier flux volumique de mélange à partir de l'aérosol test et d'air comprimé, qui peut être alimenté vers le dispositif d'alimentation (16), dans lequel le premier flux volumique de mélange peut être mélangé avec un flux volumique d'air pour obtenir un autre deuxième flux volumique de mélange dilué, avant l'entrée dans le dispositif d'alimentation (16), **caractérisé par** une chambre de mélange (31) vers laquelle sont alimentés le premier flux volumique de mélange et le flux volumique d'air, séparément ou déjà mélangés préalablement, dans lequel la chambre de mélange (31) est pourvue d'un dispositif de mise en rotation (33, 40) à son extrémité côté flux entrant et/ou à son extrémité côté flux sortant, les sens de montage étant inversés dans le cas de deux dispositifs de mise en rotation (33, 40).

7. Dispositif selon la revendication 6, **caractérisé par** un dispositif de circulation d'air (29), en particulier un compresseur, installé en aval ou en amont de la chambre de mélange (31) vu dans le sens d'écoulement, ainsi que par un filtre HEPA (26) installé en amont du dispositif de circulation d'air (29) vu dans le sens d'écoulement.

8. Dispositif selon la revendication 7, **caractérisé en ce que** le compresseur est un ventilateur ou un compresseur à canal latéral.

9. Dispositif selon l'une des revendications 6 à 8, **caractérisé par** une chambre de mélange préalable, dans laquelle le premier flux de mélange est mélangé avec le flux volumique d'air, avant que le deuxième flux volumique de mélange ainsi obtenu soit alimenté dans la chambre de mélange (31).
